# EUROPEAN PATENT SPECIFICATION

(11) **EP 2 855 085 B1**
(45) Date of publication and mention of the grant of the patent: **01.07.2020**
(21) Application number: 13762554.7
(22) Date of filing: 24.05.2013
(51) Int. Cl.: B25B 5/02, B32B 5/26, B32B 17/02

(54) **A REINFORCED GLASS-FIBRE MAT**
VERSTÄRKTE GLASFASERMATTE
MAT DE FIBRES DE VERRE RENFORCÉ

(30) Priority: 24.05.2012 TR 201206081
(43) Date of publication of application: 08.04.2015
(73) Proprietor: Dalsan Yatirim ve Insaat A.S., 06060 Ankara (TR)
(72) Inventor: DALOGLU, Mehmet Bahattin, 06060 Ankara (TR); DALOGLU, Timucin, 06060 Ankara (TR)
(74) Representative: Rastelli, Franco
(86) International application number: PCT/IB2013/054293
(87) International publication number: WO 2013/175434

(56) References cited:
- WO-A1-98/32907
- US-A- 3 993 822
- US-A1- 2004 152 379
- US-A1- 2005 148 250
- US-A1- 2005 153 616
- US-A1- 2005 202 258
- US-A1- 2005 238 863
- US-A1- 2007 197 114
- US-A1- 2008 057 318
- US-A1- 2010 319 839
- US-A1- 2011 297 291
- US-B2- 7 300 515

## Description

### Technical Field

The present invention relates to a method for producing a reinforecd glass-fibre mat which is used in building sector for the production of gypsum board.

### Background of the Invention

In building sector, particularly in production of gypsum board, glass-fibre mat enabling to turn gypsum into board by coating it from both sides thereof is used. Glass-fibre mats comprise a glass-fibre layer and a filling layer which is improving the tensile strength of the said glass-fibre layer and providing resistance to water. The glass-fibre layer is fed from a roller to the area where the filling fluid tank composing the filling layer is located. There is a rotating cylinder inside the tank where the filling fluid generating the filling layer is provided. The said cylinder receives the filling fluid inside the tank by rotating and plasters this fluid to the glass-fibre layer passing over it. Thereafter, the fluid puddled onto the said glass-fibre layer in excess is scraped by a scraper and returned into the filling fluid tank. After the scraping process, the glass-fibre mat comprising the glass-fibre layer and the filling layer is sent to drying and becomes final product.

However, glass-fibre mats which are produced using only filling material cannot present desired strength and cause the occurrence of various fractures during the usage.

The United States patent document no. US2010/0087114 discloses a glass-fibre mat consisting of glass-fibre layer and fill layer. It is also disclosed in the said patent document that glass-fibre mat has low strength. In the said United States patent document, it is disclosed that modification is done at the angle made by the glass-fibre layer via coating roller during coating in the process of coating by filling fluid.

The United States patent document no. US6547901 discloses a plasterboard. The said plasterboard is obtained by coating the plaster with glass-fibre mats from its edges. In the said United States patent document, it is disclosed that reinforcement element is placed between glass-fibre mat and plaster. However, production of this plasterboard is both difficult and costly.

### Summary of the Invention

An objective of the present invention is to provide a method for producing a reinforced glass-fibre mat to be coated on both sides of gypsum to form a gypsum board, said mat having increased strength properties and being resistant to flame and to moisture. This objective is achieved by the method as defined in the claim.

### Detailed Description of the Invention

"The Reinforced Glass-Fibre Mat " realized to fulfil the objectives of the present invention is shown in the figures attached, in which:
Figure 1 is an exploded perspective view of the glass-fibre mat.
Figure 2 is a partial view of the production line of the glass-fibre mat.
Figure 3 is a schematic view of the gypsum board produced using the glass-fibre mats.

The components illustrated in the figures are individually numbered, where the numbers refer to the following:
1. Glass-fibre mat
2. Glass-fibre layer
3. Filling layer
4. Reinforcement element
   R1. First roller
   R2. Second roller
   ST. Filling fluid tank
   C. Cylinder
   S. Scraper
   G. Gypsum
   GB. Gypsum board

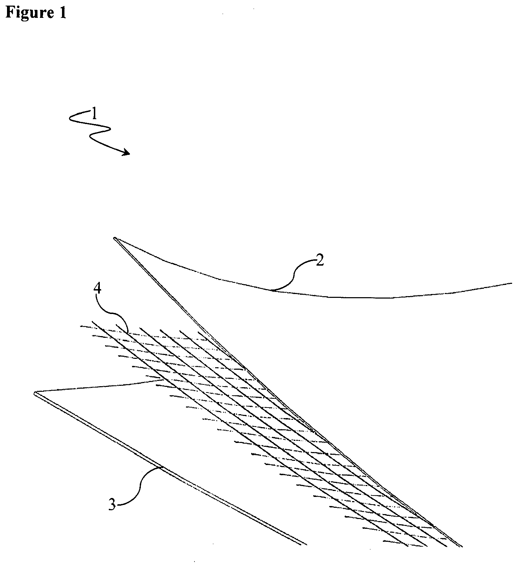

The reinforced glass-fibre mat (1) comprises:
at least one glass-fibre layer (2) which is made of combining glass-fibres;
at least one filling layer (3) which increases strength properties of the glass-fibre layer (2); and
at least one reinforcement element (4) which is located between the glass-fibre layer (2) and the filling layer (3) and provides a massive increase in strength (Figure 1).

The glass-fibre layer (2) is a layer which is obtained by compressing the glass-fibres while aligning them in rows.

The filling layer (3) is obtained by spreading the filling fluid onto the glass-fibre layer (2) in desired thickness and such that it will be distributed on the glass-fibre layer (2) surface equally. The said filling layer (3) increases tensile strength of the glass-fibre layer (2) at a certain degree.

The reinforcement element (4) can be any material that is synthetic, can be woven, strength enhancing, portable and flexible such as polypropylene, glass-fibre, carbon-fibre or very thin steel plate. The said reinforcement element (4) is coated by the filling fluid composing the filling layer (3) together with the glass-fibre layer (2) during production. Thus, it is ensured that the reinforcement element (4) and the glass-fibre layer (2) are integral with one another and do not dissociate from each other.

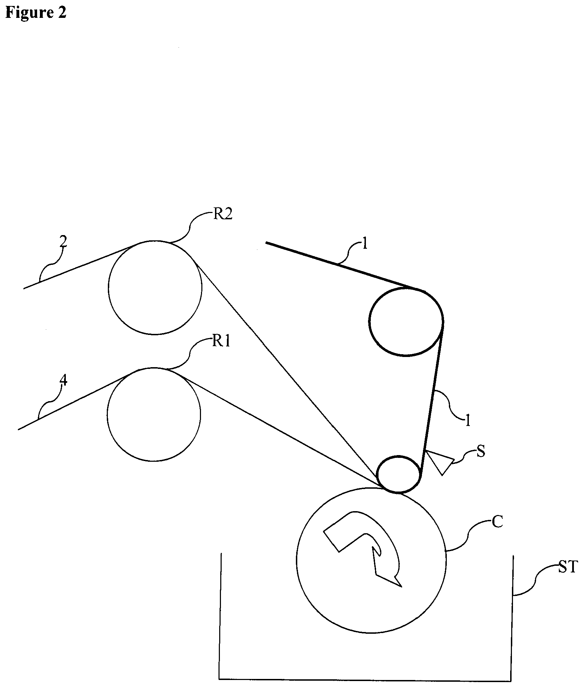

In production of the glass-fibre mat (1), the glass-fibre layer (2) is fed from a roller (R2) whereas the reinforcement element (4) is fed from another roller (R1). The glass-fibre layer (2) and the reinforcement element (4) contact each other when they come over the cylinder (C) where they will be coated by the filling liquid and they are coated by the filling liquid on the movable cylinder (C) located inside the filling fluid tank (ST). The excessive filling liquid puddled onto the glass-fibre layer (2) and reinforcement element (4) after the coating process is scraped over the glass-fibre layer (2) and the reinforcement element (4) preferably by means of a scraper (S) and it is transmitted back to the filling fluid tank (ST). The produced glass-fibre mat (1) comprising the reinforcement element (4) and the filling layer (3) as a result of coating is then sent to drying from here and becomes final product after drying (Figure 2).

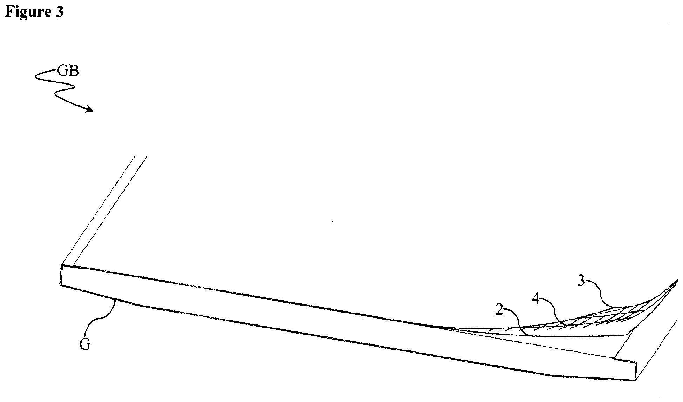

The glass-fibre mat (1) is used in production of gypsum board (GB) used in building sector, by coating the gypsum (G) from both sides thereof upon taking the gypsum (G) in between. The glass-fibre mat (1) is located in both sides of the gypsum comprising the reinforcement element (4) for preventing confusion of which side comprises the reinforcement element (4) while using the gypsum board (GB) (Figure 3).

## Claims

1. A method for producing a gypsum board (GB) used in the building sector, comprising the steps of:
(a) producing a glass-fibre mat (1) by
(i) feeding a glass-fibre layer (2) made of combining glass-fibres from a roller (R2),
(ii) feeding a reinforcement element (4) from another roller (R1),
(iii) contacting said glass-fibre layer (2) and said reinforcement element (4) over a moving cylinder (C) and coating by a filling liquid the contacted said glass-fibre layer (2) and said reinforcement element (4) on the moving cylinder (C) located inside a filling fluid tank (ST),
(iv) scraping excess filling liquid that is puddled onto the glass-fibre layer (2) and the reinforcement element (4) over the glass-fibre layer (2) and the reinforcement element (4) after the coating process and transmitting the excess filling liquid back to the filling fluid tank (ST), and
(v) drying the produced glass-fibre mat (1) comprising a filling layer (3) which increases strength properties of the glass-fibre layer (2) and the reinforcement element (4) which is located between the glass-fibre layer (2) and the filling layer (3) and provides a massive increase in strength to form a final product after drying; and
(b) coating said glass-fibre mat (1) thus produced on both sides of gypsum (G) to form said gypsum board (GB),
said reinforcement element (4) being any material that is synthetic, can be woven, strength enhancing, portable and flexible such as polypropylene, glass-fibre, carbon-fibre.

## Patentansprüche

1. Verfahren zum Herstellen einer Gipsplatte (GB), die im Baugewerbe verwendet wird, umfassend folgende Schritte:
(a) Herstellen einer Glasfasermatte (1) durch
(i) Zuführen einer durch Vereinigen von Glasfasern hergestellten Glasfaserlage (2) von einer Walze (R2),
(ii) Zuführen eines Verstärkungselements (4) von einer anderen Walze (R1),
(iii) Inkontaktbringen der Glasfaserlage (2) und des Verstärkungselements (4) über einem sich bewegenden Zylinder (C) und Beschichten der Glasfaserlage (2) und des Verstärkungselements (4), welche in Kontakt gebracht wurden, mit einer Füllflüssigkeit auf dem sich bewegenden Zylinder (C), der innerhalb eines Füllfluidbehälters (ST) angeordnet ist,
(iv) Abstreifen von überschüssiger Füllflüssigkeit, die auf der Glasfaserschicht (2) und dem Verstärkungselement (4) Pfützen bildet, über die Glasfaserschicht (2) und das Verstärkungselement (4) nach dem Beschichtungsvorgang und Rückführen der überschüssigen Füllflüssigkeit zu dem Füllfluidbehälter (ST), und
(v) Trocknen der hergestellten Glasfasermatte (1), die eine Fülllage (3), welche Festigkeitseigenschaften der Glasfaserlage (2) verstärkt, und das Verstärkungselement (4), das zwischen der Glasfaserlage (2) und der Fülllage (3) angeordnet ist und für eine massive Erhöhung der Festigkeit sorgt, umfasst, um nach dem Trocknen ein Endprodukt auszubilden; und
(b) Beschichten der auf diese Weise hergestellten Glasfasermatte (1) auf beiden Seiten mit Gips (G), um die Gipsplatte (GB) auszubilden,
wobei das Verstärkungselement (4), das jedes beliebige synthetische Material ist, gewebt, festigkeitsverbessernd, tragbar und flexibel sein kann, wie etwa Polypropylen, Glasfaser, Kohlefaser.

## Revendications

1. Procédé de fabrication d'une plaque de plâtre (GB) utilisée dans le secteur de la construction, comprenant les étapes suivantes :
(a) production d'un tapis de fibres de verre (1) par
(i) apport d'une couche de fibres de verre (2) réalisée en combinant des fibres de verre à partir d'un rouleau (R2),
(ii) apport d'un élément de renforcement (4) à partir d'un autre rouleau (R1),
(iii) mise en contact de ladite couche de fibres de verre (2) et dudit élément de renforcement (4) par le biais d'un cylindre mobile (C) et enduction de ladite couche de fibres de verre (2) et dudit élément de renforcement (4) d'un liquide de remplissage sur le cylindre mobile (C) situé à l'intérieur d'un réservoir de fluide de remplissage (ST),
(iv) raclage de liquide de remplissage excédentaire accumulé sur la couche de fibres de verre (2) et de l'élément de renforcement (4) à partir de la couche de fibres de verre (2) et de l'élément de renforcement (4) après l'opération d'enduction, et renvoi du liquide de remplissage excédentaire vers le réservoir de fluide de remplissage (ST), et
(v) séchage du tapis de fibres de verre (1) produit comprenant une couche de remplissage (3), laquelle améliore les propriétés de résistance de la couche de fibres de verre (2) et de l'élément de renforcement (4) situé entre la couche de fibres de verre (2) et la couche de remplissage (3), et augmente considérablement la résistance pour former un produit final après séchage ; et
(b) enduction dudit tapis de fibres de verre (1) ainsi produit sur les deux côtés avec du plâtre (G) pour former ladite plaque de plâtre (GB),
ledit élément de renforcement (4) consistant en n'importe quel matériau synthétique, peut être tissé, augmentant la résistance, portable et souple, tel que le polypropylène, la fibre de verre, la fibre de carbone.
